# EUROPEAN PATENT SPECIFICATION

(11) **EP 0 954 943 B1**
(45) Date of publication and mention of the grant of the patent: **17.08.2005**
(21) Application number: 97946978.0
(22) Date of filing: 03.12.1997
(51) Int. Cl.: H04Q 11/04, H04L 12/56

(54) **DYNAMIC TRAFFIC CONDITIONING**
DYNAMISCHE VERKEHRSKONDITIONIERUNG
CONDITIONNEMENT DYNAMIQUE DE TRAFIC

(30) Priority: 23.12.1996 US 772256; 14.03.1997 US 818612
(43) Date of publication of application: 10.11.1999
(73) Proprietor: Nortel Networks Limited, St. Laurent, Quebec H4S 2A9 (CA)
(72) Inventor: CHAPMAN, Alan, Stanely, John, Kanata, Ontario K2K 1V5 (CA); KUNG, Hsiang-Tsung, Lexington, MA 02173 (US)
(74) Representative: Ertl, Nicholas Justin
(86) International application number: PCT/CA1997/000936
(87) International publication number: WO 1998/028938

(56) References cited:
- EP-A- 0 706 297
- NEWMAN P ET AL: "FLOW LABELLED IP : A CONNECTIONLESS APPROACH TO ATM" PROCEEDINGS IEEE INFOCOM '96, vol. 3, 24 March 1996, pages 1251-1260, XP000622261
- DAMASKOS S ET AL: "THE BERKOM-II FLOWSPEC AND ITS MAPPING ON ATM" SUPERCOMM/ICC '94., 1 May 1994, pages 141-146, XP000438899

## Description

### Field of the Invention

The invention relates generally to the conditioning of traffic at a node of a data network. In particular, it is directed to a technique by which the traffic is dynamically classified at a node and delivered downstream according to the Quality of Service (QOS) specified by the assigned class or by such a network administrator as the network operator.

### Background of the Invention

Multi-media networks will require that a data flow be given certain QOS for a network connection. The recently proposed resource reservation protocol (RSVP) for IP (and signalling in ATM networks) is a way of requesting a particular QOS but pre-negotiation of this sort is foreign to the current data networking model and would require changes at the application level.

The major driving force behind the requirement for different QOSs in the data network is the need to introduce real time flows which have distinct limits in the tolerance to delay, and the variations in that delay. Interactive voice and video demand that the total delay does not exceed the threshold beyond which the human interaction is unacceptably impaired. Non-interactive voice and video streams which are being transferred in real time require that the maximum delay variation is bounded so that buffers can be kept to a reasonable size and guaranteed not to underflow. Meeting the delay requirements for real time flows usually means that these flows must be given priority over other traffic. This in turn brings in a requirement to limit the amount of such high priority traffic by some admission control policy to ensure that other classes of traffic do get some of the available bandwidth.

There are applications other than voice and video that can benefit from controlled latency. Network control traffic such as DNS transactions represent a small fraction of the total but will provide a much improved performance if treated with priority.

There is another class of traffic which does not have the tight requirements of voice or video but does involve human interaction with computers and can lead to noticeable decreases in productivity (or increases in frustration) if subjected to long delays. This traffic type is generated by applications such as X-Windows, Telnet and, more often now, world wide web browsing. This traffic can be protected from long queuing delays caused by bulk transfers such as FTP or NFS by allocating to it some guaranteed portion of the bandwidth as part of an output scheduling policy.

Even the bulk traffic can suffer from too much competition. Often a file transfer will be aborted after using much network resource because the overall time has exceeded the delay tolerance of the application or the user or management policies in intermediate servers. Also, when congestion causes packets to be dropped, it can easily impact many flows, and cause many resends. By guaranteeing a certain number of flows a minimum bandwidth and treating the remainder as best effort, it is possible to avoid spreading packet loss over so many flows and to reduce the number of aborted flows.

It would be much more acceptable if the QOS requirements were met by the network automatically and dynamically without the need for signalling. This would fit more naturally with the current IP networking paradigm.

Traditionally, Internet services (such as FTP, Telnet, NFS) are known only to the end systems and not to the network itself. The present invention allows the network to discover the nature of the service for each traffic flow, classify it dynamically and exercise traffic conditioning by means of such techniques as admission control and scheduling when delivering the traffic downstream to support the service appropriately. The scheduling separates real time traffic from other traffic by priority and allocates bandwidth between various classes of traffic. In conjunction with scheduling, the admission control guarantees performance. The scheduling also allows implementation of overlay administrative policies to give, for instance, certain groups different treatment than other groups. The classification need not emulate precisely the effect of pre-negotiated network connections but should provide similar improvements in service quality as seen by the users and the network.

In an IP over ATM network model, as described in Newman P. et al., "Flow labeled IP: A connectionless approach to ATM" Proceedings IEEE Infocom '96, Vol. 3, (1996), pages 1251-1260, the IP forward decision is cached in the ATM hardware to determine whether packets belong to same flow should be switched directly in the ATM hardware or continue to be forwarded hop-by-hop by the router software.

In EP-0658999 published on June 21, 1995, a traffic control mechanism for ATM networks is described. The mechanism uses cell-based admission control policy based on integrated usage parameters. The integrated usage parameters include traffic parameters e.g. peak rate, sustained rate, burst size rate etc. A QOS parameter is also incorporated.

It should of course be noted that in this specification the data network can also include any packet-based or cell-based networks, including ATM networks.

### Objects of Invention

It is therefore an object of the invention to provide a method of dynamically conditioning traffic at a node of a data network.

It is a further object of the invention to provide a method of continuously monitoting and dynamically classifying traffic into one of a plurality of preset classes according to a set of classification parameters.

It is another object of the invention to provide a method of controlling the delivery of the traffic downstream according to quality of service parameters specified by the dynamically selected class.

### Summary of the Invention

According to the invention, there is provided a method of dynamically conditioning a traffic flow in a packet data network for multimedia traffic having one or more nodes, the method comprising the steps of:
continuously monitoring the traffic flow as to its flow characteristics at a node of the network;
classifying at the node the traffic flow into one of a plurality of classes according to preset criteria of flow characteristics, the preset criteria comprising protocol types of the traffic flow that include transmission control protocol (TCP) and user datagram protocol (UDP), said plurality of classes specifying respective levels of the quality of service with which to condition the traffic flow, wherein: said plurality of classes comprise two default classes, TCP interactive and UDP low latency; said TCP interactive default class comprises two subclasses, TCP bulk guaranteed and TCP bulk best effort; and said UDP low latency default class comprises two subrlasses, UDP real time and UDP bulk best effort; and
delivering downstream the traffic flow according to the quality of service specified by said one of a plurality of classes.

### Brief Description of Drawings

Figure 1 is a schematic diagram of the traffic conditioner according to an embodiment of the invention.
Figures 2 and 3 show possible locations of traffic conditioners of the invention.
Figure 4 illustrates that the traffic conditioning features of the invention can be installed at a router or a switch.
Figure 5 is a pictorial view of state transitions.
Figure 6 shows classification information being propagated downstream.
Figure 7 shows that the REJECT information is being passed forward and reflected back to the source host.
Figure 8 shows a circumstance in which a stop message is sent back upstream from a node.

### Detailed Description of the Preferred Embodiments of the Invention

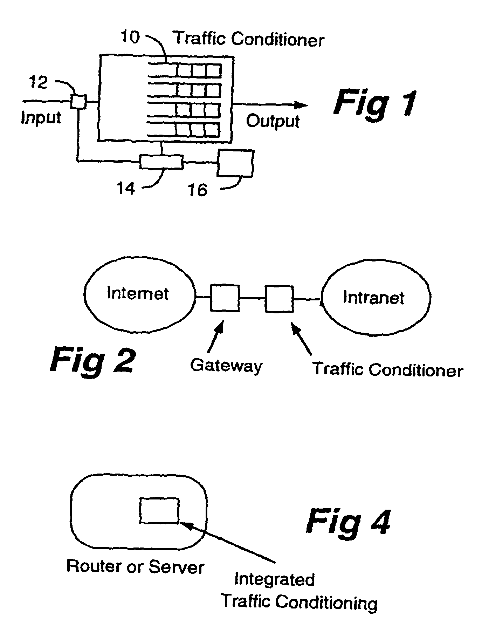

Referring to Figure 1, the traffic conditioner, according to one embodiment of the invention, includes a plurality of queues 10, at least one for each class. It is located at a node of a data network. Every packet of an input stream is inspected and identified at 12 using, for example, IP addresses, ports and protocol. A controller 14 characterises the flow (using rate, duration, etc.) and assigns it a class. A plurality of classes are envisioned according to embodiments of the invention and will be described later. The controller refers to a database 16 and uses output scheduling to allocate bandwidth among classes and implements an admission control policy for a class before delivering an output stream toward downstream nodes or to peripherals. It also discards packets from non-admitted flows and passes on flow classification to downstream nodes.

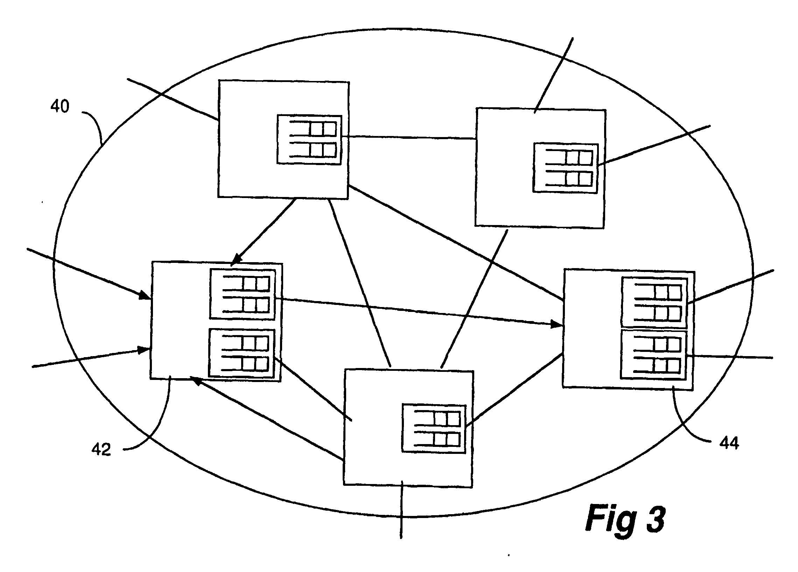

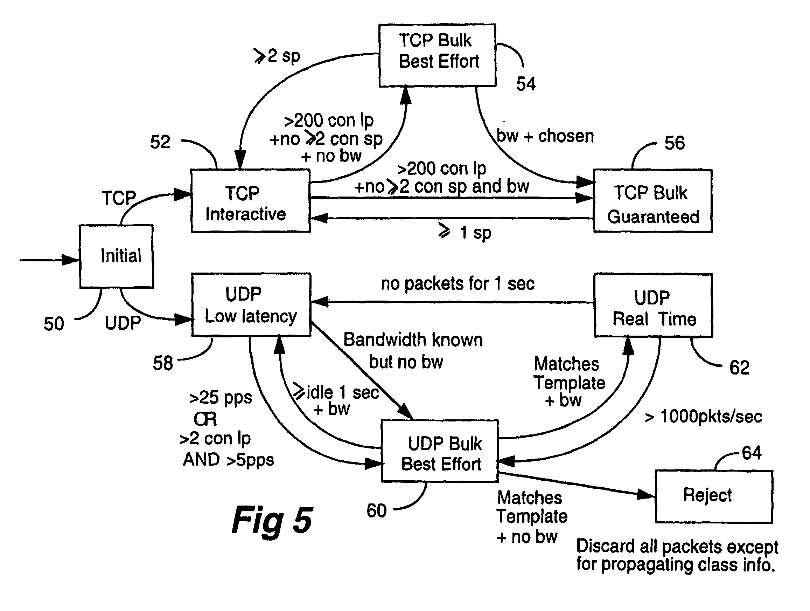

The traffic conditioning of the invention can take place at various places in the data network. For example, as gateways are often a bottleneck and bulk flows can decrease response times for interactive users, a traffic conditioner can be located at a place shown in Figure 2 which will alleviate this problem. In Figure 3, traffic conditioners are located at a plurality of IP switches which form a data network 40. Packet switches will not be able to provide good performance for new services, such as real time video, unless traffic conditioning is implemented. A conditioner at an output port of a switch 42 monitors and controls all the traffic which comes into the switch and goes out of this output port to the downstream node 44. An integrated traffic conditioning feature can be installed at a router or a server as shown in Figure 4.

In one instance of IP networking, the identifying individual traffic flow is simple. It only requires inspection of addresses and protocol port number for both source and destination. This approach has been used for some time in other applications such as TCP Routing and, more recently, in IP switching.

Any scheme which characterises and classifies flows for differing treatment should be capable of modification to suit the particular operating environment. According to one embodiment, the following six classes of traffic flow which could be used in a typical TCP/IP based network are considered and described in detail below.

### (Class 1) - Interactive Users (TCP)

This class is intended to capture TCP flows for such applications as X-windows, Telnet and lightweight web browsing. Telnet and X-windows can be very long sessions but have predominantly short packets. In this embodiment, this classification defines a short packet as less than or equal to 128 Bytes and a long packet as greater than 128 Bytes. Web browsing has a mixture of packet sizes and transaction lengths and can cause flows of long packets, particularly while loading image files. This class is the default one for TCP flows but when the flow contains a long series (e.g., 200) of long packets without an intervening series of two or more short packets, it is considered to be bulk transfer and no longer valid for this class. A TCP bulk flow may occasionally include short packets, containing only the TCP ACK message or the tail end of a sending buffer. Thus, unless the short packets are in a series of two or more in number, the flow is still considered to be bulk transfer.

### (Class 2) - Bulk Transfer with Guaranteed Bandwidth (TCP)

If TCP traffic is not interactive, it is classified as bulk transfer. Some of the bulk transfer flows are admitted to a scheduling class which has a protected portion of the bandwidth and a limited number of members such that some minimum bandwidth is guaranteed for these flows.

### (Class 3) - Bulk Transfer, Best Effort (TCP)

Any bulk TCP flows which are not admissible to the guaranteed bandwidth class are treated in this class on a best effort basis. Classes (2) and (3) are intended to handle large FTP or large web images.

### (Class 4) - Low Latency (UDP)

This class contains flows which require very low bandwidth. In general, these flows consist of low bandwidth voice, NFS requests, short NFS replies, and network control packets such as DNS transactions. Most real time voice will be continuous flow UDP (User Datagram Protocol) at less than 20 packets per second. This is the default class for UDP and flows above a threshold bandwidth are moved out fast. There would be an admission control policy such that if the allocated bandwidth for this class is used up, new flows would be moved to the best effort class.

### (Class 5) - Real Time (UDP)

Any flow with real time characteristics which will be defined below and a bandwidth too high for the low latency class will be captured in this class. High bandwidth voice and streaming video are the expected members. For example, video will be a continuous UDP flow at up to 4Mb/s = (1000pps). Flows exhibiting real time characteristics but for which there is no resource under the admission control policy, would be rejected and subsequent packets discarded.

### (Class 6) - Bulk Best Effort (UDP)

All other UDP flows will be grouped into this class. Expected members are NFS file copy and backup sessions characterised by many long packets at a substantial rate.

In summary, according to this embodiment, discrimination between traffic types is based on simple analysis of packet arrival rates and packet length plus a particular test for real time UDP traffic which will be described below. The characteristics of a flow are monitored continuously and the flow can be re-classified during its lifetime. The ability to re-classify also covers the cases where consecutive flows assume the same identity but have different characteristics.

It is possible to use port number information in some instances to determine service type and complement the dynamic classification described above. For example, TCP port 23 is the well known port for the telnet server. Since a telnet session always carries interactive traffic, it is possible to classify any TCP flow with one of its port number being 23 as TCP interactive. However, a single port number can sometimes be used for multiple services of varying nature. For instance, the TCP port number 80, reserved for the HTTP server, could be used for both TCP Interactive and TCP Bulk. A classification scheme should use static information in the packet header such as port number and protocol types, as well as the information collected dynamically.

Figure 5 is a pictorial view of state transitions involving these classes according to the embodiment. In the figure, the following abbreviations are used:
- p =: packet
- sp =: short packet
- lp =: long packet
- con lp =: consecutive long packets
- bw =: bandwidth available
- chosen =: chosen by policy
- pps =: packets per second arrival
The following criteria are also applied:
(a) For all classes, return to initial if there are no packets for 30 seconds.
(b) For all flows, check option field and if class is defined then force the flow to that class for 100 packets or 30 seconds.

Referring to Figure 5, the state machine contains the following states:
(A) Initial
(B) TCP Interactive
(C) TCP Bulk Best Effort
(D) TCP Bulk Guaranteed
(E) UDP Low Latency
(F) UDP Real Time
(G) UDP Bulk Best Effort
(H) Reject

In the following detailed description, ">" indicates "true" for all the states.

### Power up

> [Idle for 30 seconds]→ Initial
   If class information is received from upstream then force that state for 100 packets. After 100 packets or 30 seconds with no information, revert to local judgement.
> Initial (at 50 in Figure 5)
   > [Protocol=TCP] --> TCP Interactive
   > [Protocol=UDP] --> UDP Low Latency
> TCP Interactive (at 52)
   > [200 consecutive long packets each of size> 128 bytes without an intervening series of two or more short packets]
      > [Some TCP Bulk min bandwidth available]
         -> TCP Bulk Guaranteed
      > [Otherwise]
         -> TCP Bulk Best Effort
> TCP Bulk Best Effort (at 54)
   > [Departure of a flow from TCP Bulk Guaranteed] and [Picked by a Policy]
      --> TCP Bulk Guaranteed
   > [Two consecutive short packets of size no greater than 128 bytes]
      -> TCP Interactive
> TCP Bulk Guaranteed (at 56)
   > [Two consecutive short packets of size less than 128 bytes]
      --> TCP Interactive
> UDP Low Latency (at 58)
   > [After any 1 second in the state, and > 25 packets have arrived]
      --> UDP Bulk Best Effort
      or
   > [Two or more consecutive long packets] and [>5 packets in 1 second]
      -> UDP Bulk Best Effort
   >[Bandwidth is known] and [no more bandwidth available]
      -> UDP Bulk Best Effort
> UDP Bulk Best Effort (at 60)
   > [Matches real time template] and [bandwidth available in UDP video]
   --> UDP Real Time
      > [Otherwise] --> Reject
   > [Idle for more than one second] and [bandwidth available]
      -> UDP Low Latency
> UDP Real Time (at 62)
   > [300th packet arrives in time < 200 ms]
      --> UDP Bulk Best Effort
   > [Idle for 1 second]
      --> UDP Low Latency
> Reject (at 64)
   Discard all packets except those used for propagating REJECT information.

### Real Time Flow Detection

As described earlier, it is necessary to distinguish real-time traffic from other BULK UDP flows. It is reasonable to assume at the present state of the art that NFS represents the only UDP traffic which is bulk and not real-time. Then an easy way is to inspect the port numbers of the flow in question. If neither of them is 2049, the reserved port number for NFS servers, then the flow is classified as Real Time.

Similarly, if it can be assumed that real-time flows of interest all use servers with reserved port numbers, then they can be classified by the static information on port numbers. Today, most of real-time audio and video servers appear to use a set of special ports which can be easily recognized.

For circumstances where these assumptions don't apply, it is necessary to provide a dynamic method to identify real time flows. The major difference between real time UDP flows and other UDP applications such as NFS is that (a) real time streams are not self-clocked, that is, the packets are sent continuously without acknowledgements from the receiver, and (b) the average packet generation rate is a constant.

There are two ways in which these attributes can be used to detect the real time flow. Under congestion conditions, the queue for a real time flow will grow without bound whereas the queue for a self-clocked flow will only grow to the size of an acknowledged burst (the maximum burst without acknowledgement is 8 Kbytes for NFS). Another approach is to keep a history of interarrival times for the packets of a flow. Self-clocked flows will exhibit a bi-modal distribution whereas the real time streams will be uni-modal around the average rate. In one embodiment, this approach can be implemented by using a threshold that is set to a value somewhat more than the average interarrival time. Two counts are kept; one of interarrival times below the threshold and one for interarrival times above the threshold. If the second count is more than a certain value, e.g. 10% of the first count then the flow is classed as non-real time. This second method may be preferred since it does not require waiting for congestion to identify the stream. Quick admission or rejection of the flow is important.

### Scheduling Flows

There are various techniques available for scheduling multiple queues at output ports of a switching node. In any case, typically, the real time and low latency classes described above would be given absolute priority (hence the need for admission control), and the other classes would be scheduled in a way which allocates to them the proportion of the bandwidth allocated by the network administrator.

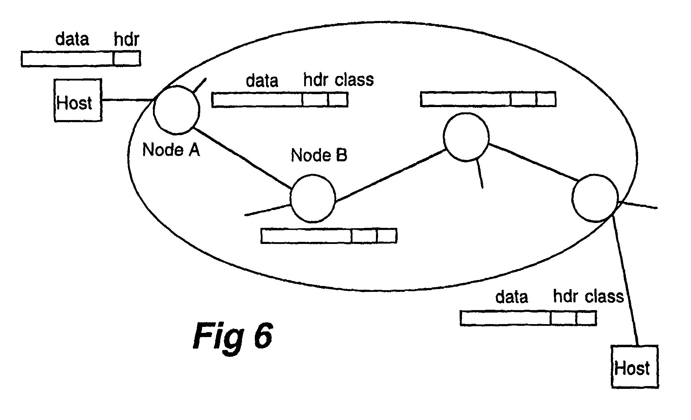

Referring to Figure 6, in a further embodiment, instead of each node performing the above classification autonomously as described thus far, the first node (node A) on the route passes on its findings to the downstream nodes and provides more efficient traffic conditioning. In yet a further embodiment, there is no reason that the source host machine cannot be considered the first node which classifies the traffic and sends the classification to nodes along the route. These downstream nodes can then use the acquired knowledge instead of local classification and give the flow a consistent treatment throughout its path. They accept the upstream classification until it expires and propagate it downstream. The information can be propagated in various ways, but in one way it could be carried in the flow by inserting information in one or more packets in the flow (for example, by an entry in the IP option field). Every n-th packet could carry the information and the downstream node would act on that information until it aged out after a multiple of n packets. In an ATM based network, the classification could be implied by the VPI/VCI value chosen for the flow.

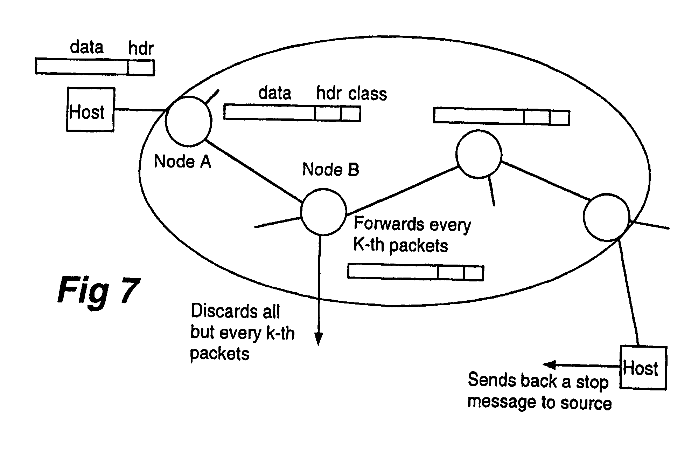

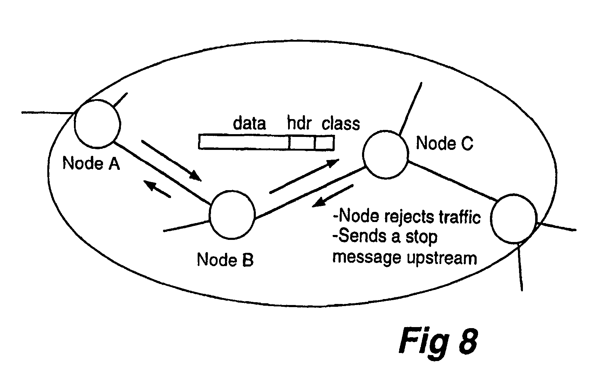

Referring to Figure 7, the classification REJECT can be reflected back from the destination host to the source host, thus improving the efficiency of the network. To facilitate this, not all packets from the flow would be discarded. Instead, every k-th packet would be passed onward with the classification in the option field. For example, node B determines that the packet must be rejected for whatever the reason, it discards all but every k-th packet, which is forwarded to the destination host, which in turn sends a message to the source host to stop. In another scenario as shown in Figure 8, instead of the host, a node which rejects the traffic stream for some reason can send a message back upstream indicating that the traffic has been rejected and should therefore be stopped.

### Complexity

In any network where different qualities of service are being supported, there has to be some process to classify the flow attributes and then a way of verifying that the flow is adhering to the attributes. This verification, or policing, can be done at the edges of a subnet or at every node. The method described here uses the mechanisms that would be in place for verification to discover the flow attributes but without the necessity for pre-negotiation such as signalling. It has, therefore, an equivalent complexity in implementation at the nodes but does not require the signalling overlay.

The administrative overlay required for policies on bandwidth allocation to the various classes, and reservation of bandwidth for pre-booked video sessions, would be no different in complexity to a signalling based system.

### Co-existence With RSVP and Administered Connections

Although the dynamic classification can run without the need for signalling, it is also possible to force the classification of the flow as a result of higher level processes. A flow that has been given a reserved path and treatment through the network by signalling or by administration can be marked as such. The automatic classification can be disabled or used to verify the characteristics of the marked flow.

According to the present invention, packet traffic flows are classified in order to group them for differing treatments. This allows quality of service distinctions to be supported even when application signalling support is not available. The implementation is no more complex than that required for policing when signalling is used and may be just as effective in improving perceived network performance and enabling new services such as video.

## Claims

1. A method of dynamically conditioning a traffic flow in a packet data network (40) for multimedia traffic having one or more nodes (42, 44), the method comprising the steps of:
continuously monitoring the traffic flow as to its flow characteristics at a node of the network (42, 44);
classifying at the node (42, 44) the traffic flow into one of a plurality of classes according to preset criteria of flow characteristics, the preset criteria comprising protocol types of the traffic flow that include transmission control protocol, hereinafter TCP, and user datagram protocol, hereinafter UDP, said plurality of classes specifying respective levels of the quality of service with which to condition the traffic flow, wherein: said plurality of classes comprise two default classes, TCP interactive (52) and UDP low latency (58); said TCP interactive default class comprises two subclasses, TCP bulk guaranteed (56) and TCP bulk best effort (54); and said UDP low latency default class comprises two subclasses, UDP real time (62) and UDP bulk best effort (60); and
delivering downstream the traffic flow according to the quality of service specified by said one of a plurality of classes.

2. The method according to claim 1, wherein, after classifying the traffic flow into the TCP interactive default class, the TCP interactive default class is changed to one or the other of the TCP bulk guaranteed subclass and the TCP bulk best effort subclass.

3. The method according to claim 2, wherein the step of changing the TCP interactive default class to one or the other of the TCP bulk guaranteed subclass and the TCP bulk best effort subclass is carried out if the traffic contains a series of long packets without an intervening series of two or more short packets.

4. The method according to claim 1, wherein, after classifying the traffic flow into the UDP low latency default class, the UDP low latency default class is changed to one or the other of the UDP real time subclass and the UDP bulk best effort subclass.

5. The method according to claim 1, further comprising the steps of:
when the step of continuously monitoring detects a real time traffic flow:
determining if the real time traffic flow can be admitted for delivery downstream, based on the available bandwidth of the data network (40); and
reclassifying the real time traffic flow into a different class for conditioning according to a quality of service specified by said different class.

6. The method according to claim 5, wherein the step of continuously monitoring the traffic flow further comprises a step of:
monitoring the characteristics of the growth of a queue at the node into which the traffic flow is stored for delivery.

7. The method according to claim 5, wherein the step of continuously monitoring the traffic flow comprises a further step of:
monitoring a history of interarrival times for packets of the traffic flow.

8. The method according to claim 5, comprising further steps of:
recording a first count for the arrival times below a preset threshold;
recording a second count for the arrival times above the threshold; and
determining the traffic flow as being a real time traffic flow unless the first count is more than the second count by a predetenmined amount.

9. The method according to claim 1, wherein the preset criteria further include the length of packets in the traffic flow and the number of consecutive packets in the traffic flow.

10. The method according to any one of claims 1 to 3, comprising further steps of:
determining a port number which the traffic uses, and
classifying the traffic into one of a plurality of classes according to the port number and the preset criteria of flow characteristics.

11. The method according to any one of the preceding claims, wherein the node is a source host from which the traffic flow is generated.

12. The method according to any one of the preceding claims, comprising a further step of:
informing one or more downstream nodes the results of monitoring and classifying.

13. The method according to claim 1, wherein the quality of service is expressed by a plurality of parameters which include a priority level of delivery and a bandwidth assigned to the traffic flow.

14. The method according to claim 12, wherein the step of informing comprises a step of:
propagating information relevant to the results in a packet which is inserted into the traffic flow.

## Patentansprüche

1. Verfahren zur dynamischen Konditionierung eines Verkehrs-Datenstromes in einem Paketdaten-Netzwerk (40) für Multimedien-Verkehr, das einen oder mehrere Knoten (42, 44) aufweist, wobei das Verfahren die folgenden Schritte umfasst:
kontinuierliches Überwachen des Verkehrs-Datenstromes hinsichtlich seiner Datenstrom-Charakteristik an einem Knoten des Netzwerkes (42, 44);
Klassifizieren des Verkehrs-Datenstromes an dem Knoten (42, 44) in eine einer Vielzahl von Klassen entsprechend voreingestellter Kriterien der Datenstrom-Charakteristiken, wobei die voreingestellten Kriterien Protokolltypen des Verkehrs-Datenstromes umfassen, die das Übertragungs-Steuerprotokoll, nachfolgend TCP, und das Benutzer-Datagramm-Protokoll, nachfolgend UDP, einschließen, wobei die Vielzahl von Klassen jeweilige Grade der Dienstgüte festlegt, mit denen der Verkehrs-Datenstrom konditioniert werden soll, wobei: die Vielzahl von Klassen zwei Vorgabeklassen, TCP-Interaktiv (52) und UDP - niedrige Latenz (58) umfasst, wobei die TCP-Interaktiv-Vorgabeklasse zwei Teilklassen, TCP-Massendaten, garantiert (56) und TCP-Massendaten, bestes Bemühen (54), umfasst; und wobei die UDP-niedrige Latenz-Vorgabeklasse zwei Teilklassen umfasst, UDP Echtzeit (62) und UDP-Massendaten, bestes Bemühen (60); und
Zustellen des Verkehrs-Datenstromes netzabwärts entsprechend der Dienstgüte, die durch die eine der Vielzahl von Klassen bestimmt ist.

2. Verfahren nach Anspruch 1, bei dem nach dem Klassifizieren des Verkehrs-Datenstromes in die interaktive TCP-Vorgabeklasse die interaktive TCP-Vorgabeklasse auf die eine oder die andere der garantierten TCP-Massendaten-Teilklasse und die TCP-Massendaten-Teilklasse besten Bemühens geändert wird.

3. Verfahren nach Anspruch 2, bei dem der Schritt des Ändems der interaktiven TCP-Vorgabeklasse auf die eine oder die andere der garantierten TCP-Massendaten-Teilklasse und die TCP-Massendaten-Teilklasse besten Bemühens ausgeführt wird, wenn der Verkehr eine Serie von langen Paketen ohne eine dazwischenliegende Serie von zwei oder mehr kurzen Paketen enthält.

4. Verfahren nach Anspruch 1, bei dem nach der Klassifizierung des Verkehrs-Datenstromes in die UDP-Vorgabeklasse mit niedriger Latenz die UDP-Vorgabeklasse mit niedriger Latenz auf die eine oder die andere der UDP-Echtzeit-Teilklasse und die UDP-Massendaten-Teilklasse besten Bemühens geändert wird.

5. Verfahren nach Anspruch 1, das weiterhin die folgenden Schritte umfasst:
wenn der Schritt der kontinuierlichen Überwachung einen Echtzeit-Verkehrs-Datenstrom feststellt:
Feststellen, ob der Echtzeit-Verkehrs-Datenstrom für eine Zustellung netzabwärts zugelassen werden kann, auf der Grundlage der verfügbaren Bandbreite des Datennetzwerkes (40); und
Umklassifizieren des Echtzeit-Verkehrs-Datenstromes in eine andere Klasse zur Konditionierung entsprechend der Dienstgüte, die für die andere Klasse festgelegt ist.

6. Verfahren nach Anspruch 5, bei dem der Schritt der kontinuierlichen Überwachung des Verkehrs-Datenstromes weiterhin den Schritt der:
Überwachung der Charakteristiken des Wachstums einer Warteschlange an dem Knoten umfasst, in der der Verkehrs-Datenstrom für die Zustellung gespeichert wird.

7. Verfahren nach Anspruch 5, bei dem der Schritt der kontinuierlichen Überwachung des Verkehrs-Datenstromes den weiteren Schritt der:
Überwachung einer Historie der Zwischenankunftszeiten für Pakete des Verkehrs-Datenstromes umfasst.

8. Verfahren nach Anspruch 5, das die weiteren folgenden Schritte umfasst:
Aufzeichnen einer ersten Zählung für die Ankunftszeiten unterhalb eines voreingestellten Schwellenwertes;
Aufzeichnen einer zweiten Zählung für die Ankunftszeiten oberhalb des Schwellenwertes; und
Bestimmen des Verkehrs-Datenstromes als ein Echtzeit-Verkehrs-Datenstrom, sofem nicht die erste Zählung um einen vorgegebenen Betrag größer als die zweite Zählung ist.

9. Verfahren nach Anspruch 1, bei dem die voreingestellten Kriterien weiterhin die Länge der Pakete in dem Verkehrs-Datenstrom und die Anzahl von aufeinanderfolgenden Paketen in den Verkehrs-Datenstrom einschließen.

10. Verfahren nach einem der Ansprüche 1-3, das die weiteren folgenden Schritte umfasst:
Feststellung einer Port-Nummer, die der Verkehr verwendet, und
Klassifizieren des Verkehrs in eine einer Vielzahl von Klassen entsprechend der Port-Nummer und der voreingestellten Kriterien der Datenstrom-Charakteristiken.

11. Verfahren nach einem der vorhergehenden Ansprüche, bei dem der Knoten ein Quellen-Host ist, von dem der Verkehrs-Datenstrom erzeugt wird.

12. Verfahren nach einem der vorhergehenden Ansprüche, das den weiteren Schritt des:
Informierens eines oder mehrerer netzabwärts gelegener Knoten über die Ergebnisse der Überwachung und Klassifizierung umfasst.

13. Verfahren nach Anspruch 1, bei dem die Dienstgüte durch eine Vielzahl von Parametern ausgedrückt ist, die den Prioritätsgrad der Zustellung und eine dem Verkehrs-Datenstrom zugeordnete Bandbreite einschließen.

14. Verfahren nach Anspruch 12, bei dem der Schritt des Informierens einen Schritt der:
Weiterleitung von Information, die für die Ergebnisse von Bedeutung ist, in einem Paket umfasst, das in den Verkehrs-Datenstrom eingefügt wird.

## Revendications

1. Procédé pour conditionner de manière dynamique un flux de trafic dans un réseau de données par paquets (40) pour trafic multimédia ayant un ou plusieurs noeuds (42, 44), le procédé comprenant les étapes consistant à :
surveiller en continu le flux de trafic quant à ses caractéristiques de flux à un noeud du réseau (42, 44) ;
classer au noeud (42, 44) le flux de trafic en une d'une pluralité de classes selon des critères prédéfinis de caractéristiques de flux, les critères prédéfinis comprenant des types de protocole du flux de trafic qui comprennent un protocole de contrôle de transmission, ci-après désigné TCP, et un protocole de datagramme utilisateur, ci-après désigné UDP, ladite pluralité de classes spécifiant des niveaux respectifs de la qualité du service avec laquelle conditionner le flux de trafic, dans lequel : ladite pluralité de classes comprend deux classes par défaut, TCP interactive (52) et UDP faible retard (58) ; ladite classe par défaut TCP interactive comprend deux sous-classes, TCP volume garanti (56) et TCP volume meilleur effort (54) ; et la classe par défaut UDP faible retard comprend deux sous-classes, UDP temps réel (62) et UDP volume meilleur effort (60) ; et
acheminer vers l'aval le flux de trafic selon la qualité de service spécifiée par ladite une d'une pluralité de classes.

2. Procédé selon la revendication 1, dans lequel, après classification du flux de trafic dans la classe par défaut TCP interactive, la classe par défaut TCP interactive est changée en une ou l'autre de la sous-classe TCP volume garanti et de la sous-classe TCP volume meilleur effort.

3. Procédé selon la revendication 2, dans lequel l'étape consistant à changer la classe par défaut TCP interactive en une ou l'autre de la sous-classe TCP volume garanti et de la sous-classe TCP volume meilleur effort est exécutée si le trafic contient une série de paquets longs sans l'intervention d'une série de deux ou plusieurs paquets courts.

4. Procédé selon la revendication 1, dans lequel, après classification du flux de trafic dans la classe par défaut UDP faible retard, la classe UDP faible retard est changée en l'une ou l'autre de la sous-classe UDP temps réel et de la sous-classe UDP volume meilleur effort.

5. Procédé selon la revendication 1, comprenant en outre les étapes consistant à :
quand l'étape consistant à surveiller en continu détecte un flux de trafic temps réel :
déterminer si le flux de trafic temps réel peut être admis pour acheminement vers l'aval, basé sur la largeur de bande disponible du réseau de données (40) ; et
reclasser le flux de trafic temps réel en une classe différente pour conditionnement selon une qualité de service spécifiée par ladite classe différente.

6. Procédé selon la revendication 5, dans lequel l'étape consistant à surveiller en continu le flux de trafic comprend en outre une étape consistant à :
surveiller les caractéristiques de la croissance d'une file d'attente au noeud dans lequel le flux de trafic est stocké pour acheminement.

7. Procédé selon la revendication 5, dans lequel l'étape consistant à surveiller en continu le flux de trafic comprend une autre étape consistant à :
surveiller un historique des temps entre arrivées pour des paquets du flux de trafic.

8. Procédé selon la revendication 5, comprenant en outre l'étape consistant à :
enregistrer un premier compte des heures d'arrivée en dessous d'un seuil prédéfini ;
enregistrer un deuxième compte pour les heures d'arrivée au-dessus du seuil ; et
déterminer le flux de trafic comme étant un flux de trafic en temps réel à moins que le premier compte ne soit supérieur au deuxième compte d'une quantité prédéterminée.

9. Procédé selon la revendication 1, dans lequel les critères prédéfinis comprennent en outre la longueur des paquets dans le flux de trafic et le nombre de paquets consécutifs dans le flux de trafic.

10. Procédé selon l'une quelconque des revendications 1 à 3, comprenant en outre les étapes consistant à :
déterminer un nombre de ports que le trafic utilise, et
classer le trafic dans une d'une pluralité de classes selon le nombre de ports et les critères prédéfinis des caractéristiques de flux.

11. Procédé selon l'une quelconque des revendications précédentes, dans lequel le noeud est un ordinateur principal source à partir duquel le flux de trafic est généré.

12. Procédé selon l'une quelconque des revendications précédentes, comprenant une autre étape consistant à :
informer un ou plusieurs noeuds en aval des résultats de la surveillance et de la classification.

13. Procédé selon la revendication 1, dans lequel la qualité du service est exprimée par une pluralité de paramètres qui comprennent un niveau de priorité d livraison et une bande passante attribuée au flux de trafic.

14. Procédé selon la revendication 12, dans lequel l'étape consistant à informer comprend une étape consistant à :
propager des informations relatives aux résultats dans un paquet qui est inséré dans le flux de trafic.
